# EUROPEAN PATENT APPLICATION

(11) **EP 4 769 057 A1**
(43) Date of publication of application: **01.07.2026**
(21) Application number: 25212825.1
(22) Date of filing: 31.10.2025
(51) Int. Cl.: G05F 1/46, H02M 3/07

(54) **VOLTAGE REGULATOR RANDOMIZATION TECHNIQUES**

(30) Priority: 26.12.2024 US 202419002392
(71) Applicant: INTEL Corporation, Santa Clara, CA 95054 (US)
(72) Inventor: KUMAR, Raghavan, Hillsboro, 97124 (US); MATHEW, Sanu K., Portland, 97229 (US); KRISHNAMURTHY, Harish K., Beaverton, 97006 (US); GONG, Minxiang, Portland, 97229 (US)
(74) Representative: HGF

(57) **Abstract**

An apparatus comprises a push-pull regulation loop (PPRL). The PPRL comprises a PMOS transistor, an NMOS transistor, and a first plurality of capacitors. The PPRL also comprises a control circuit coupled to the PMOS transistor, the NMOS transistor, and the first plurality of capacitors. The control circuit comprises a reference terminal and is to receive a randomized voltage reference signal via the reference terminal. The control circuit further adjusts a reset voltage available at the first plurality of capacitors based on the randomized voltage reference signal.

## Description

### BACKGROUND

Cryptographic circuits such as Advanced Encryption Standard (AES) are vulnerable to Correlation Power Analysis (CPA) side-channel attacks (SCAs), where an adversary monitors current signatures or electromagnetic traces emanating from the die to decipher the value of embedded secret keys. For example, the attacker can construct Hamming-weight (HW) and Hamming-distance (HD) models of vulnerable circuit nodes for various key guesses and compute the correlation of measured signatures against these switching-activity models. With a sufficient number of measurements, the correct key guess can emerge, displaying a significantly higher correlation with physical data and compromising the security of the cipher.

### BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings listed below.
FIG. 1A is a diagram of a digital signature authentication architecture, in accordance with some embodiments.
FIG. 1B is a diagram of RSA computation phases, in accordance with some embodiments.
FIG. 2 is a block diagram of a voltage regulator (VR) with a push-pull regulation loop (PPRL), in accordance with some embodiments.
FIG. 3 illustrates a diagram of charging, transferring, and reset phases performed by the VR of FIG. 2, in accordance with some embodiments.
FIG. 4 is a diagram of switch strength modulation techniques, in accordance with some embodiments.
FIG. 5 is a block diagram of a push-pull amplifier with a randomized voltage reference signal that can be used as a resetting stage (e.g., in the VR of FIG. 2), in accordance with some embodiments.
FIG. 6 is a flow diagram of an example method for manufacturing a VR, in accordance with some embodiments.
FIG. 7 illustrates a block diagram of an example machine upon which any one or more of the operations/techniques (e.g., methodologies) discussed herein may perform.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

As used herein, the term "IO" indicates input/output. As used herein, the term "R-C" indicates resistance and capacitance. As used herein, the term "Rx" indicates receiver (or receive). As used herein, the term "Tx" indicates transmitter (or transmit). As used herein, the term "TRX" indicates transceiver. As used herein, the term "UCIe" indicates Universal Chiplet Interconnect Express. As used herein, the term "Vref" indicates reference voltage. As used herein, the term "Vin" indicates input voltage, and "Vout" indicates output voltage. As used herein, the terms "serially coupled," "serially connected," and "connected in series" are synonymous to each other and indicate a serial connection between two or more components/circuits where the serial connection can be based on a direct or indirect electrical connection between the two or more components/circuits. As used herein, the terms "parallel coupled," "parallel connected," and "connected in parallel" are synonymous to each other and indicate a parallel connection between two or more components/circuits where the parallel connection can be based on a direct or indirect electrical connection between the two or more components/circuits.

The goal of side-channel suppression techniques is to provide a significant boost in minimum traces to disclose (MTD), which is the minimum number of encryption traces required to disclose the first secret key byte. VR-based countermeasures aim to isolate the load current signatures by providing an input-independent input current signature to the external world, thereby significantly enhancing the MTD of the first extracted secret key byte (bytes). The VR can be calibrated to obtain peak side-channel resistance setting for its control loop while providing knobs that can be randomized to further boost the MTD. In some aspects, VR knobs randomizations are contained within a certain dynamic range to minimize the drop in VR efficiency. However, compute-intensive cryptographic algorithms such as public-key encryption (RSA, Elliptic curve crypto) contain phases of computation, that are independent of the underlying secret key. Similarly, the public-key cryptographic hardware performing signature verification uses a public key, which does not require side-channel resistance. Continuously operating the VR in side-channel resistant mode results in a drop in IVR efficiency during those phases of computation.

Solutions to mitigate SCAs include a linear low-dropout (LDO) regulator augmented with randomized switching noise injection to bolster SCA resistance. The linear LDOs can provide more than 3 orders of magnitude time-domain (MTD) improvement while providing a minimal frequency-domain SCA resistance. The other countermeasures include random masking and arithmetic transformations. In random masking, a random mask is added to the data before computation. The intermediate nodes are in a masked domain, thereby breaking the correlation between the processed data and the measured power or EM traces. In arithmetic transformations, the individual Sbox slices in an AES data path are designed using different composite-field polynomials with a randomized byte dataflow, thereby breaking the static relationship between the power profiles and processed data.

In some aspects, countermeasures to enhance SCA resistance can employ integrated voltage regulators, random masking, duplicate data paths, and current equalization using switched capacitors and pseudo-hysteresis controllers, incurring high area or performance overheads.

While low-dropout (LDO) regulators with random injected noise, shunt bleeders, and buck converters with randomized control offer significant side-channel suppression in the time domain, they are less effective against frequency-domain attacks. In contrast, arithmetic countermeasures like random masking, heterogeneous Galois-field arithmetic, and current-equalization modify the frequency content of current traces within cycle boundaries without significantly transforming time-domain characteristics.

The disclosed techniques include a cryptographic algorithm-aware VR with time-interleaved randomizations based on different phases of crypto hardware computations. The proposed VR switches to a maximum efficiency mode during non-secure phases of computation that do not need side-channel protection. During the secure phases of computation, the VR switches to a side-channel mode by enabling dynamic randomization of VR control knobs to maximize side-channel resistance.

The disclosed techniques include a VR that achieves effective side-channel leakage suppression uniformly across time- and frequency-domain SCA by breaking the correlation between the measured current signature and the data-dependent on-die switching activity. The proposed VR architecture is a switched capacitor-based integrated voltage regulator solution that aims at completely isolating (both physically and electrically) the input current signature from the downstream encryption engine, breaking the correlation between the measured current signature and the data-dependent on-die switching activity. This leads to a flat current profile at the input independent of the kind of crypto engine and the associated load variations during encryption. As a result, the attacker is presented with a flat current profile while attempting to mount a CPA attack on the underlying cryptographic engine, rendering the attack ineffective. In some aspects, the VR can be configured as a secure integrated voltage regulator (SIVR).

Previous SCA-resistant solutions are ineffective against combined time/frequency-domain analysis and also impose significant area/energy overheads on the underlying crypto engine. The prior solutions are also often dependent on the cryptographic algorithm used in the engine. On the other hand, the disclosed VR offers a crypto-agnostic solution that protects the underlying engine irrespective of the specific algorithm/arithmetic being computed.

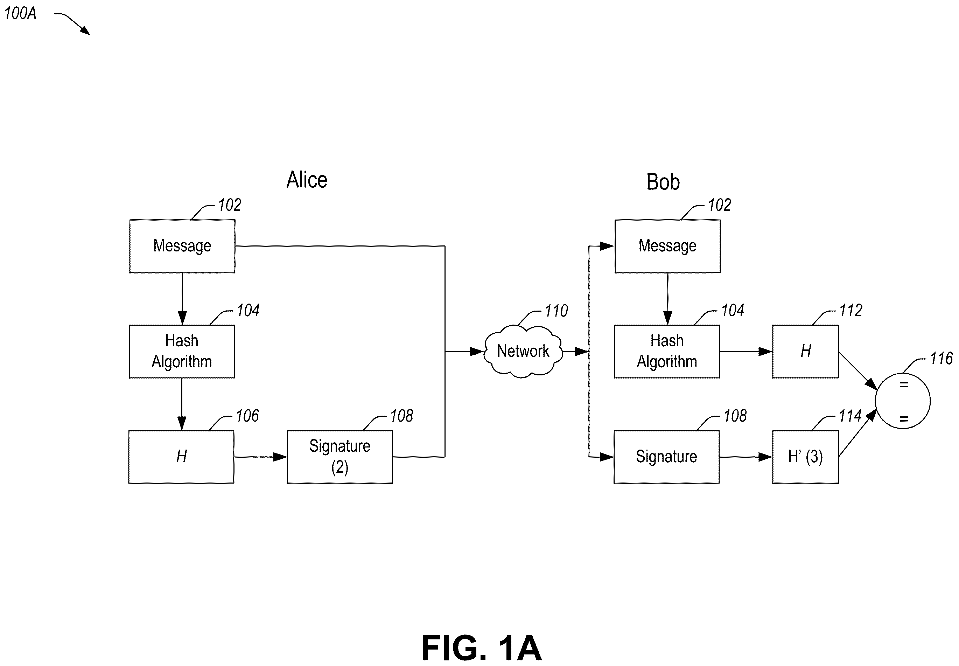

FIG. 1A is a diagram 100A of a digital signature authentication architecture, in accordance with some embodiments.

Cryptographic hardware to accelerate public-key cryptosystems, such as RSA and elliptic curve cryptography (ECC), is used extensively for digital signature authentication (DSA), which is used to verify the authenticity of the message by issuing a digital signature. The public-key cryptographic system generates a pair of keys (a public key and a private key). During the signing process, the issuer signs the message using the private key. For example, user Alice generates a hash 106 of message 102 using a hash algorithm 104. User Alice applies a private key to the hash to generate a signature 108 (e.g., a signed hash).

A verifier uses the public key to verify the authenticity of the underlying message. For example, message 102 and signature 108 are transmitted via network 110 to user Bob. User Bob applies hash algorithm 104 to the received message 102 to obtain hash 112. User Bob also uses signature 108 and the public key to obtain a hash 114. A comparison 116 is performed between hash 112 and hash 114 to verify user Alice.

The private key is a secure key known only to the signer (e.g., user Alice). However, the public key is published outside and is known to the external world (including user Bob). Hence, during the verification process, the cryptographic hardware is not expected to provide side-channel resistance, while signing operation using the private key is expected to be resistant against timing and power/EM side-channel attacks.

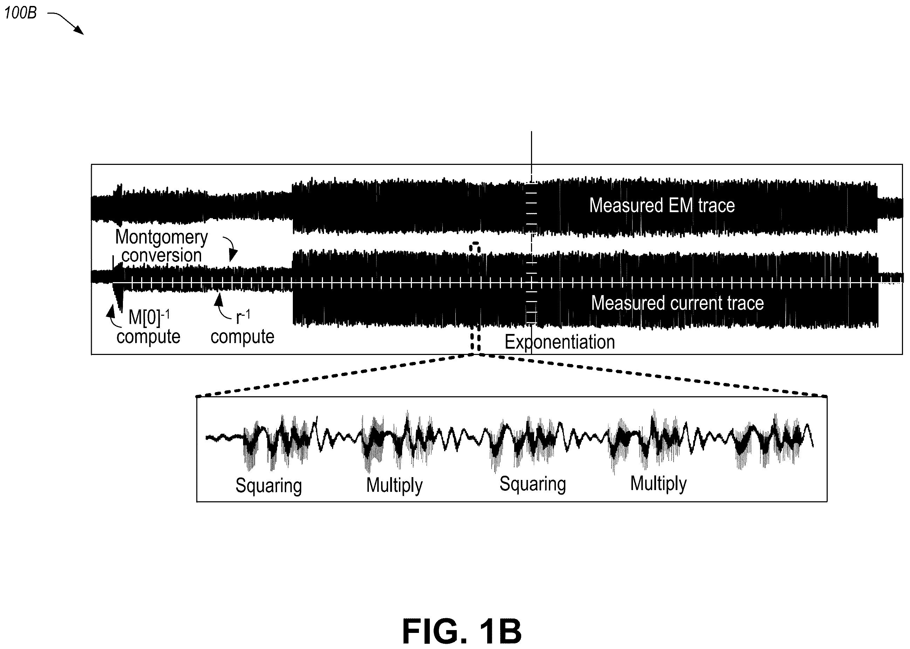

FIG. 1B is a diagram 100B of RSA computation phases, in accordance with some embodiments.

The public-key cryptographic hardware can include a Montgomery computation to accelerate modular reduction, which is one of the key operations. Hence, the hardware involves different phases of computation, that do not depend on the underlying secret key and usually depends only on the modulus, which is part of the public key. For example, the power traces captured from RSA operation show distinct regions such as Montgomery constant computation and Montgomery conversion of input operands, followed by modular exponentiation, which is the core RSA operation. The Montgomery constant and conversion operations do not require side-channel resistance, as they are purely independent of the underlying secret key. Hence, this also provides opportunities, even within the signing operation, to maximize VR efficiency when side-channel resistance is not required.

Unlike conventional switched capacitor converter operations, which have a charging and discharging phase, the proposed VR enables a third "reset" phase in addition to the charge and discharge phases to ensure the capacitor charging phase always starts back at the same point as the previous cycle, thereby ensuring that the input current profile is independent of the encryption engine activity. This correct-by-construction method helps eliminate any correlation between the load and the input current, presenting a flat current profile when an attacker tries to mount a CPA attack on the underlying cryptographic engine.

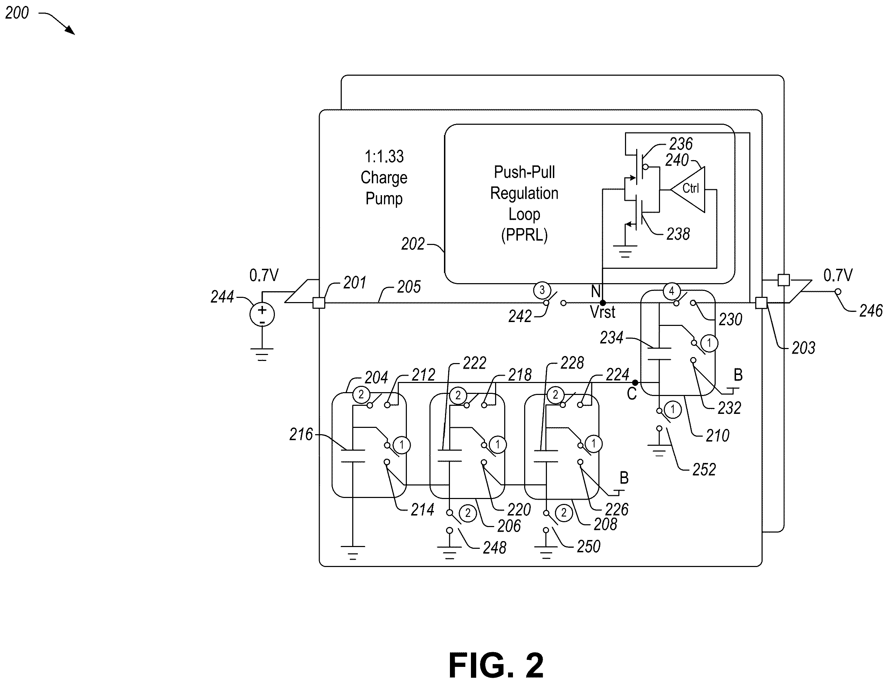

FIG. 2 is a block diagram of a VR 200 with a push-pull regulation loop (PPRL), in accordance with some embodiments. Referring to FIG. 2, VR 200 includes PPRL 202, a plurality of flying capacitor (FC) circuits (e.g., FC circuits 204, 206, 208, and 210), transistor switches (also referred to as switches or switching circuits) 248, 250, 252, and 242, and a rail 205 coupled between an input terminal 201 and an output terminal 203.

In some aspects, input terminal 201 is coupled to a voltage source 244, and output terminal 203 is coupled to a cryptographic circuit terminal 246.

In some aspects, FC circuit 210 includes FC 234 and switches 230 and 232. In some aspects, FC circuit 208 includes FC 228 and switches 224 and 226. In some aspects, FC circuit 206 includes FC 222 and switches 218 and 220. In some aspects, FC circuit 204 includes FC 216 and switches 212 and 214.

In some aspects, switches 248, 250, and 252 couple respective FC circuits 206, 208, and 210 to ground.

In some aspects, FC circuits 204, 206, and 208 are coupled to FC circuit 210 at node C.

The PPRL 202 can be configured to include a PMOS transistor 236, an NMOS transistor 238, and a control circuit 240, all coupled as illustrated in FIG. 2. In some aspects, the control circuit 240 can be configured to activate or deactivate switches (as discussed below) to enable the charge phase, the transfer phase, and the reset phase.

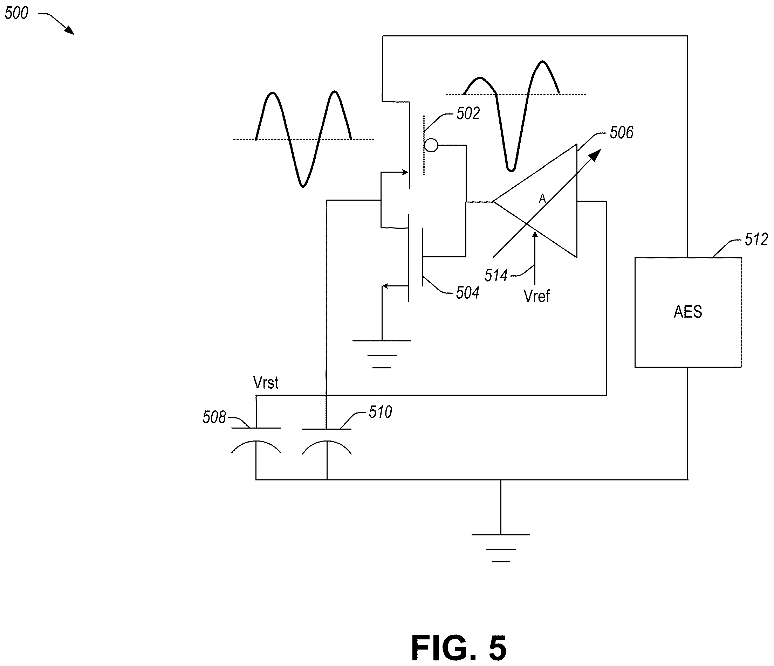

In some aspects, PPRL 202 can be configured as the push-pull amplifier 500 of FIG. 5. In some aspects, PPRL 202 is coupled to rail 205 at node N (as illustrated in FIG. 2).

The switches in FIG. 2 are also referenced to indicate one of groups 1, 2, 3, or 4, which they can be associated with. For example, switch group 1 can include switches 214, 220, 226, 252, and 232. Switch group 2 can include switches 248, 250, 212, 218, and 224. Switch group 3 can include switch 242. Switch group 4 can include switch 230.

The disclosed VR 200 operates distinctly in 3-phases (namely, a charging phase, a discharging phase, and a reset phase).

In some aspects, a charge phase can be initiated (e.g., by control circuit 240) by turning ON switches of groups 1 and 3 and turning OFF switches of groups 2 and 4, which allows the capacitors to charge back from the input grid.

In some aspects, a transfer (or discharge) phase can be initiated (e.g., by the control circuit 240 for transferring a charge to terminal 246 of a cryptographic circuit) by turning ON switches of groups 2 and 4 and turning OFF switches of groups 1 and 3. During the discharge phase, the capacitors are connected in a series configuration to boost the voltage to 1.33 times the input voltage Vin, and the encryption engine is allowed to operate. This configuration results in Node N (or node Vrst) getting discharged to somewhere between Vin and 1.33*Vin, depending upon the load activity.

In some aspects, a reset phase can be initiated (e.g., by the control circuit 240) by turning ON switches of group 1 and turning OFF switches of groups 2, 3, and 4. In this phase, the push-pull amplifier (e.g., PPRL 202 or push-pull amplifier 500) brings the node back to Vin so that the charging phase can start again with Vrst internally at the same point as every other cycle, maintaining infinite side-channel resistance and completely masking any encryption activity.

In some aspects, when the switches of group 1 are activated, the charge passes between FC circuit 210 and FC circuits 208, 206, and 204 via node B.

The proposed VR architecture (e.g., as illustrated in FIG. 2) can be configured as a boosting charge pump that takes the input voltage and generates 1.33*Vin as the output voltage, unlike traditional solutions that generally employ a 1:1 ratio. This allows the SOC to have other IPs operate directly from the input supply without taking an efficiency hit from another IVR like an LDO/SC/Buck solution.

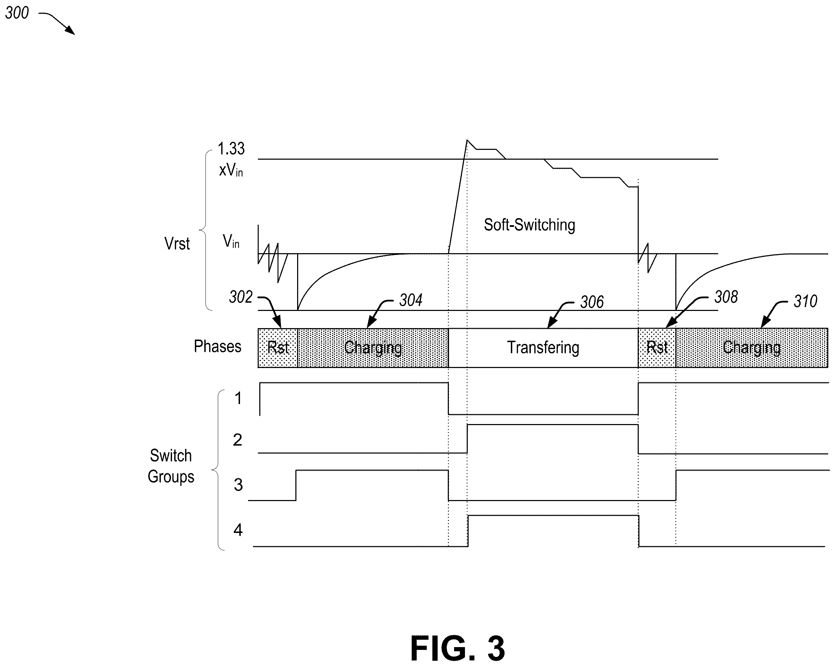

In some aspects, the ratio of VR 200 can be selected to be 1:1.33 to optimize capacitor count and value and associated area overhead, minimize switch area, and provide reasonable efficiency while still enabling higher voltage to the encryption engine and ensuring the capacitors reset to start charging from the same point at the end of the cycle. The timing diagram for a 3-phase VR (as illustrated in FIG. 3) demonstrates the charging, discharging, and reset phases of the proposed VR.

The sequencing and activation of switches in different groups during the disclosed three phases is also illustrated in FIG. 3.

FIG. 3 illustrates diagram 300 of the charge, transfer, and reset phases performed by the VR 200 of FIG. 2, in accordance with some embodiments. Referring to FIG. 3, diagram 300 illustrates the activation of switches during sequential phases, including reset phase 302, charge phase 304, transfer phase 306, reset phase 308, and charge phase 310.

The disclosed techniques include the following crypto-aware VR randomizations. In some aspects, multiple VR knobs can be further randomized to enhance the protection by many folds and completely obscure any encryption activity in connection with the disclosed VR architecture. Some of the knobs that can be randomized in the disclosed VR without affecting its operation or functionality are listed below and include switch strength modulation, randomization of the Vrst value (push-pull regulation dithering), switching clock dithering, and multimodal VR. The proposed techniques leverage the selection of one or more knobs independently to boost VR's efficiency based on the cryptographic algorithm's phase of operation. For example, the RSA verify operation can invoke only switch-strength modulation for better power efficiency, while the signing operation can invoke all four knobs listed below to enhance the side-channel resistance.

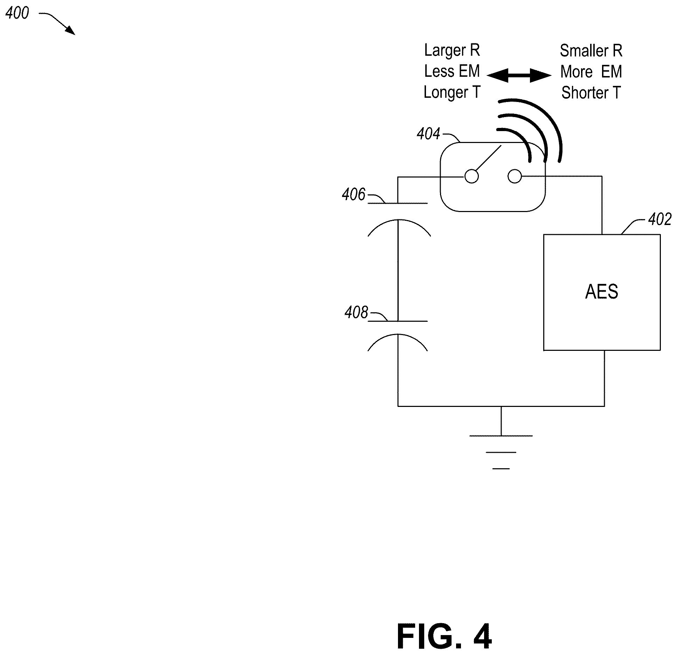

FIG. 4 is a diagram 400 of switch strength modulation techniques, in accordance with some embodiments. Referring to FIG. 4, diagram 400 can be a simplified diagram of a switch 404 that can be used in the VR 200. More specifically, switch 404 can be coupled between capacitors 406 and 408 and cryptographic circuit 402.

In some aspects, switch 404 can be any of the switches used by the VR 200.

In some aspects, switch 404 can be representative of the switches from group 3 (e.g., switch 242) and group 4 (e.g., switch 230). In some aspects, switch 404 (which can be representative of the switches in VR 200 from groups 3 and 4) can be modulated in size, which modifies the charging and discharging times of the capacitors (e.g., capacitors 406 and 408, which can be representative of capacitors 508 and 510 or other capacitors illustrated in FIG. 2). By modulating the switch resistance randomly, not only can the starting and ending points of the capacitor voltages be changed, but also a significant improvement in the electromagnetic radiations from the VR can be achieved (where such radiations can become another source of SCAs). FIG. 4 shows the impact of the switch strength modulation and its impact on the EM side of side-channel leakages.

In some aspects, randomizing the Vrst value (push-pull regulation dithering) can be based on the following configurations discussed in connection with FIG. 5.

FIG. 5 is a block diagram of a push-pull amplifier 500 with a randomized voltage reference signal that can be used as a resetting stage (e.g., the PPRL 202 in the VR of FIG. 2), in accordance with some embodiments. Referring to FIG. 5, push-pull amplifier 500 can include a PMOS transistor 502, an NMOS transistor 504, a control circuit 506, and capacitors 508 and 510. The push-pull amplifier 500 can be configured to supply voltage to a cryptographic circuit (e.g., AES circuit 512) coupled to PMOS transistor 502 and capacitors 508 and 510 (as illustrated in FIG. 5).

The push-pull LDO architecture in FIG. 5 can be used to bring the capacitor voltages (e.g., voltages of capacitors 508 and 510) back to the original starting point (e.g., perform a reset to Vrst as discussed above). While the implementation of the reset stage is shown as a push-pull LDO, the idea can be extended to other implementations (e.g., another switched capacitor or a buck regulator), depending on the available area.

In some aspects, the control circuit 506 is configured to receive a voltage reference signal 514, which can be used to determine the reset voltage value of Vrst during the reset phase. In some aspects, the voltage reference signal 514 can be randomized (e.g., dynamically during the operation of the push-pull amplifier 500 or set based on a predetermined configuration).

In some aspects, the push-pull amplifier 500 can bring the Vrst node from FIG. 2 back to Vin during an operating cycle. Suppose the reference voltage (e.g., voltage reference signal 514) is randomly changed. In that case, the push-pull LDO randomly moves the starting point of the charging cycle to a different point every operation cycle. The resulting induced noise, which is uncorrelated with the encryption cycle, can further help in adding more layers to the masking and improve side channel protection.

In some aspects, the reset cycle can be enabled when the VR is disconnected from the load, making this randomization functionality cleaner and obscured. FIG. 5 illustrates this with a sinusoidal variation shown on the input of the push-pull amplifier translating to an equivalent sinusoid at the Vrst node.

In some aspects, the disclosed techniques include the following configurations related to switching clock dithering. In some aspects, the disclosed VR architecture operates in three phases, as described above. If the charge and discharge times are shorter than the frequency, the overall switching frequency of the VR can also be randomly dithered. This adds an additional element to the frequency domain and also plays an essential role in modulating the output resistance of the switched capacitor converter, thereby naturally changing the point at which the Vrst node ends at the end of the discharging period. This configuration can help minimize electromagnetic waves and provide dual protection.

In some aspects, the disclosed techniques include the following configurations related to multi-modal VR. Given the set of switches within the VR, other multi-modes can be enabled so that the VR can move seamlessly between such modes (e.g., LDO to "switched cap" and back). Additionally, the switching between modes can be performed randomly to provide additional camouflaging and SCA protection.

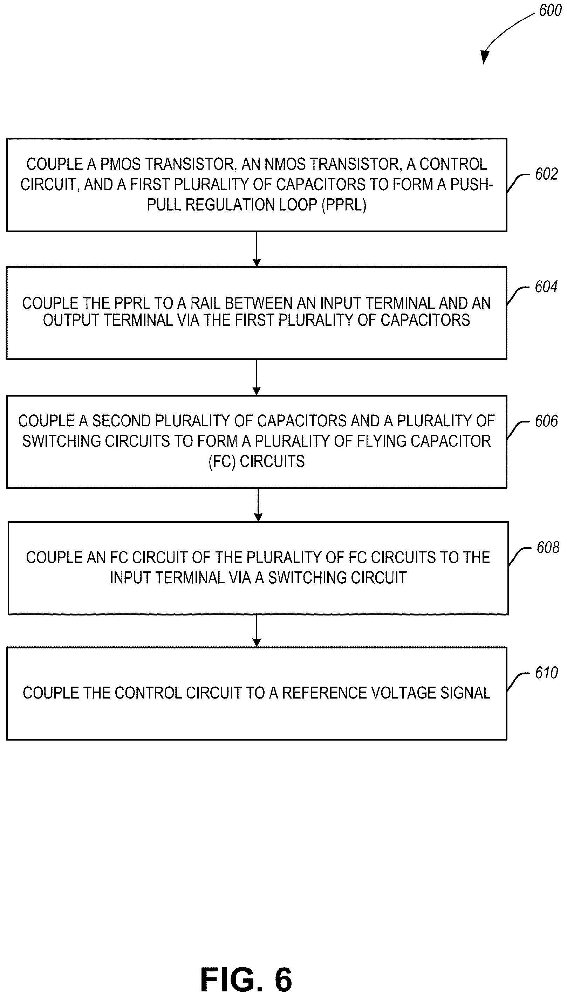

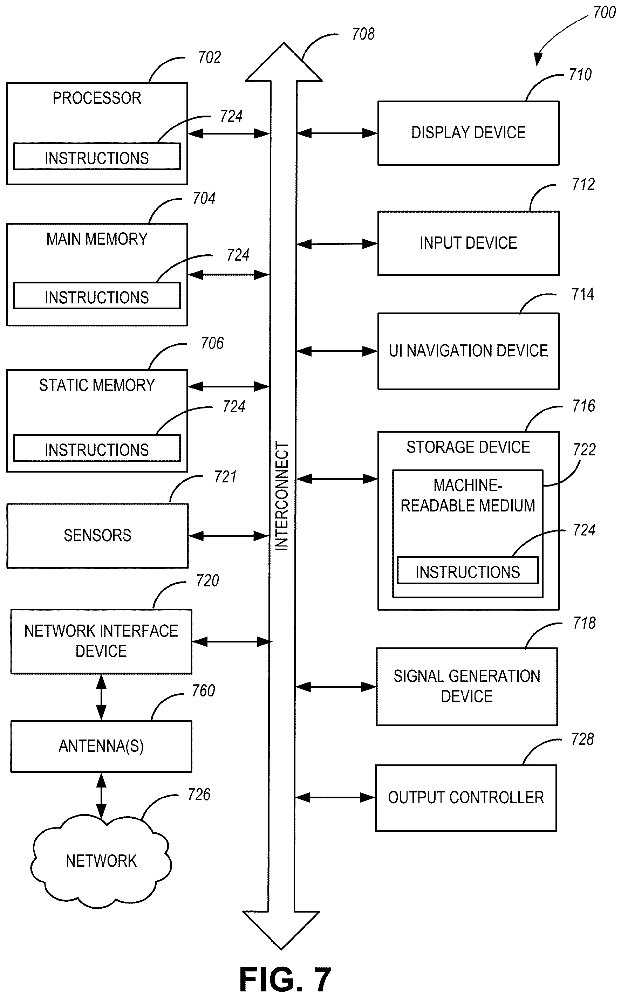

FIG. 6 is a flow diagram of an example method 600 for making a voltage regulator, in accordance with some embodiments. Referring to FIG. 6, method 600 includes operations 602, 604, 606, 608, and 610, which may be executed by a processor, an embedded controller, a receiver circuit, a transceiver circuit, or another processor of a computing device (e.g., hardware processor 702 of machine 700 illustrated in FIG. 7, which can include one or more of the circuits discussed in connection with FIGS. 1A-5). In some embodiments, one or more of the circuits discussed herein (e.g., in connection with FIGS. 1A-5) can perform the functionalities (or include the configurations or circuitry) associated with FIG. 6, as well as one or more of the examples listed below.

At operation 602, a PMOS transistor, an NMOS transistor, a control circuit, and a first plurality of capacitors are coupled to form a push-pull regulation loop (PPRL).

At operation 604, the PPRL is coupled to a rail between an input terminal and an output terminal via the first plurality of capacitors.

At operation 606, a second plurality of capacitors and a plurality of switching circuits are coupled to form a plurality of flying capacitor (FC) circuits.

At operation 608, an FC circuit of the plurality of FC circuits is coupled to the input terminal via a switching circuit.

At operation 610, the control circuit is coupled to a reference voltage signal.

FIG. 7 illustrates a block diagram of an example machine 700 upon which any one or more of the techniques (e.g., methodologies) discussed herein may perform. In alternative embodiments, the machine 700 may operate as a standalone device or may be connected (e.g., networked) to other machines. In a networked deployment, machine 700 may operate in the capacity of a server machine, a client machine, or both in server-client network environments. In an example, machine 700 may function as a peer machine in a peer-to-peer (P2P) (or other distributed) network environment. The machine 700 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 700 may include a hardware processor 702 (e.g., a central processing unit (CPU), a graphics processing unit (GPU), a hardware processor core, or any combination thereof), a main memory 704, and a static memory 706, some or all of which may communicate with each other via an interlink (e.g., bus) 708. In some aspects, the main memory 704, the static memory 706, or any other type of memory (including cache memory) used by machine 700 can be configured based on the disclosed techniques or can implement the disclosed memory devices.

Specific examples of main memory 704 include Random Access Memory (RAM) and semiconductor memory devices, which may include, in some embodiments, storage locations in semiconductors such as registers. Specific examples of static memory 706 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 700 may further include a display device 710, an input device 712 (e.g., a keyboard), and a user interface (UI) navigation device 714 (e.g., a mouse). In an example, the display device 710, the input device 712, and the UI navigation device 714 may comprise a touchscreen display. The machine 700 may additionally include a storage device (e.g., drive unit or another mass storage device) 716, a signal generation device 718 (e.g., a speaker), a network interface device 720, and one or more sensors 721, such as a global positioning system (GPS) sensor, compass, accelerometer, or other sensors. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 702 and/or instructions 724 may comprise processing circuitry and/or transceiver circuitry.

The storage device 716 may include a machine-readable medium 722 on which one or more sets of data structures or instructions 724 (e.g., software) embodying or utilized by any one or more of the techniques or functions described herein can be stored. Instructions 724 may also reside, completely or at least partially, within the main memory 704, within static memory 706, or the hardware processor 702 during execution thereof by machine 700. In an example, one or any combination of the hardware processor 702, the main memory 704, the static memory 706, or the storage device 716 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 722 is illustrated as a single medium, the term "machine-readable medium" may include a single medium or multiple media (e.g., a centralized or distributed database and/or associated caches and servers) configured to store instructions 724.

An apparatus of machine 700 may be one or more of a hardware processor 702 (e.g., a central processing unit (CPU), a graphics processing unit (GPU), a hardware processor core, or any combination thereof), a main memory 704 and a static memory 706, one or more sensors 721, a network interface device 720, one or more antennas 760, a display device 710, an input device 712, a UI navigation device 714, a storage device 716, instructions 724, a signal generation device 718, and an output controller 728. The apparatus may be configured to perform one or more of the methods and/or operations disclosed herein. The apparatus may be intended as a component of machine 700 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 700 and that causes machine 700 to perform any one or more of the techniques of the present disclosure, or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 724 may further be transmitted or received over a communications network 726 using a transmission medium via the network interface device 720 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.8.4 family of standards, a Long Term Evolution (LTE) family of standards, a Universal Mobile Telecommunications System (UMTS) family of standards, peer-to-peer (P2P) networks, among others.

In an example, the network interface device 720 may include one or more physical jacks (e.g., Ethernet, coaxial, or phone jacks) or one or more antennas to connect to the communications network 726. In an example, the network interface device 720 may include one or more antennas 760 to wirelessly communicate using at least one single-input multiple-output (SIMO), multiple-input multiple-output (MIMO), or multiple-input single-output (MISO) techniques. In some examples, the network interface device 720 may wirelessly communicate using multiple-user MIMO techniques. The term "transmission medium" shall be taken to include any intangible medium that can store, encode, or carry instructions for execution by machine 700 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, one or more of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented wholly or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, examples that include the elements shown or described are also contemplated. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar. However, the scope of the disclosure is not limited in this respect.

Described implementations of the subject matter can include one or more features, alone or in combination, as illustrated below by way of examples.

Example 1 is an apparatus comprising a PMOS transistor comprising a drain terminal coupled to a first terminal of a cryptography circuit; an NMOS transistor comprising a drain terminal coupled to a source terminal of the PMOS transistor; a first capacitor comprising a first terminal and a second terminal, the first terminal of the first capacitor coupled to the drain terminal of the PMOS transistor, and the second terminal of the first capacitor coupled to a second terminal of the cryptography circuit; and a control circuit comprising a reference terminal, an input terminal, and an output terminal, the output terminal of the control circuit coupled to a gate terminal of the PMOS transistor, and the reference terminal to supply a voltage reference signal.

In Example 2, the subject matter of Example 1 includes subject matter where the gate terminal of the PMOS transistor is coupled to a gate terminal of the NMOS transistor.

In Example 3, the subject matter of Example 2 includes subject matter where a source terminal of the NMOS transistor is coupled to a ground terminal.

In Example 4, the subject matter of Example 3 includes a second capacitor comprising a first terminal and a second terminal, the first terminal of the second capacitor coupled to the input terminal of the control circuit.

In Example 5, the subject matter of Example 4 includes subject matter where the second terminal of the second capacitor is coupled to the second terminal of the cryptography circuit and the second terminal of the first capacitor.

In Example 6, the subject matter of Example 5 includes subject matter where the second terminal of the first capacitor and the second terminal of the second capacitor are coupled to an input voltage terminal via a first switching circuit.

In Example 7, the subject matter of Example 6 includes subject matter where the second terminal of the first capacitor and the second terminal of the second capacitor are coupled to an output voltage terminal via a second switching circuit.

In Example 8, the subject matter of Example 7 includes a first flying capacitor (FC) circuit comprising a first FC comprising a first terminal and a second terminal, the second terminal of the first FC coupled to the ground terminal, and a third switching circuit coupled to the first terminal of the first FC and the second switching circuit.

In Example 9, the subject matter of Example 8 includes subject matter where the second terminal of the first capacitor and the second terminal of the second capacitor are coupled to the first terminal of the first FC.

In Example 10, the subject matter of Example 9 includes at least a second FC coupled to the second terminal of the first FC.

In Example 11, the subject matter of Examples 5-10 includes a system-on-chip (SoC), the SoC comprising an integrated circuit (IC), the IC comprising at least two of the NMOS transistor, the PMOS transistor, the first capacitor, the second capacitor, or the control circuit.

In Example 12, the subject matter of Example 11 includes subject matter where the SoC further comprises at least one connector and wherein the at least one connector conforms with at least one of a Universal Serial Bus (USB) specification, a High-Definition Multimedia Interface (HDMI) specification, a Thunderbolt specification, a Peripheral Component Interconnect Express (PCIe) specification, or an Ethernet specification.

Example 13 is an apparatus comprising a push-pull regulation loop (PPRL), the PPRL comprises a PMOS transistor, an NMOS transistor coupled to the PMOS transistor, a first plurality of capacitors, and a control circuit coupled to the PMOS transistor, the NMOS transistor, and the first plurality of capacitors, the control circuit comprising a reference terminal, and the control circuit is to: receive a randomized voltage reference signal via the reference terminal; and adjust a reset voltage available at the first plurality of capacitors based on the randomized voltage reference signal.

In Example 14, the subject matter of Example 13 includes a plurality of flying capacitor (FC) circuits comprising a corresponding plurality of FCs, the plurality of FC circuits coupled to each other, and a first FC circuit of the plurality of FC circuits coupled to the first plurality of capacitors via a rail configured between an input terminal and an output terminal of the apparatus.

In Example 15, the subject matter of Example 14 includes subject matter where the first FC circuit further comprises a first FC, the first FC coupled to a second FC in a second FC circuit of the plurality of FC circuits; a first switching circuit coupled to the first FC; and a second switching circuit coupled to the first FC and the first switching circuit, the second switching circuit configured between the output terminal and a node of the PPRL coupled to the first plurality of capacitors.

In Example 16, the subject matter of Example 15 includes a third switching circuit coupled between the input terminal and the node of the PPRL.

In Example 17, the subject matter of Example 16 includes subject matter where the second switching circuit and the third switching circuit are associated with at least one randomized operational parameter, the at least one randomized operational parameter comprising switch resistance.

In Example 18, the subject matter of Example 17 includes subject matter where the control circuit causes a reset of voltage at the node of the PPRL based on the at least one randomized operational parameter.

Example 19 is a process of making a voltage regulator, comprising coupling a PMOS transistor, an NMOS transistor, a control circuit, and a first plurality of capacitors to form a push-pull regulation loop (PPRL); coupling the PPRL to a rail between an input terminal and an output terminal via the first plurality of capacitors; coupling a second plurality of capacitors and a plurality of switching circuits to form a plurality of flying capacitor (FC) circuits; coupling an FC circuit of the plurality of FC circuits to the input terminal via a switching circuit; and coupling the control circuit to a reference voltage signal.

In Example 20, the subject matter of Example 19 includes coupling a subset of the plurality of FC circuits in series with each other and to the FC circuit.

Example 21 is at least one machine-readable medium, including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

## Claims

1. An apparatus comprising:
a PMOS transistor comprising a drain terminal coupled to a first terminal of a cryptography circuit;
an NMOS transistor comprising a drain terminal coupled to a source terminal of the PMOS transistor;
a first capacitor comprising a first terminal and a second terminal, the first terminal of the first capacitor coupled to the drain terminal of the PMOS transistor, and the second terminal of the first capacitor coupled to a second terminal of the cryptography circuit; and
a control circuit comprising a reference terminal, an input terminal, and an output terminal, the output terminal of the control circuit coupled to a gate terminal of the PMOS transistor, and the reference terminal to supply a voltage reference signal.

2. The apparatus of claim 1, wherein the gate terminal of the PMOS transistor is coupled to a gate terminal of the NMOS transistor, and wherein a source terminal of the NMOS transistor is coupled to a ground terminal.

3. The apparatus of claim 2, further comprising:
a second capacitor comprising a first terminal and a second terminal, the first terminal of the second capacitor coupled to the input terminal of the control circuit, wherein the second terminal of the second capacitor is coupled to the second terminal of the cryptography circuit and the second terminal of the first capacitor, wherein the second terminal of the first capacitor and the second terminal of the second capacitor are coupled to an input voltage terminal via a first switching circuit, and wherein the second terminal of the first capacitor and the second terminal of the second capacitor are coupled to an output voltage terminal via a second switching circuit.

4. The apparatus of claim 3, further comprising:
a first flying capacitor, FC, circuit comprising:
a first FC comprising a first terminal and a second terminal, the second terminal of the first FC coupled to the ground terminal; and
a third switching circuit coupled to the first terminal of the first FC and the second switching circuit.

5. The apparatus of claim 4, wherein the second terminal of the first capacitor and the second terminal of the second capacitor are coupled to the first terminal of the first FC, and the apparatus further comprising:
at least a second FC coupled to the second terminal of the first FC.

6. The apparatus of any of claims 3-5, further comprising:
a system-on-chip, SoC, the SoC comprising an integrated circuit, IC, the IC comprising at least two of the NMOS transistor, the PMOS transistor, the first capacitor, the second capacitor, or the control circuit.

7. The apparatus of claim 6, wherein the SoC further comprises at least one connector, and wherein the at least one connector conforms with at least one of a Universal Serial Bus ,USB, specification, a High-Definition Multimedia Interface, HDMI, specification, a Thunderbolt specification, a Peripheral Component Interconnect Express, PCIe, specification, or an Ethernet specification.

8. An apparatus comprising:
a push-pull regulation loop, PPRL, comprising:
a PMOS transistor;
an NMOS transistor coupled to the PMOS transistor;
a first plurality of capacitors; and
a control circuit coupled to the PMOS transistor, the NMOS transistor, and the first plurality of capacitors, the control circuit comprising a reference terminal, and the control circuit is to:
receive a randomized voltage reference signal via the reference terminal; and
adjust a reset voltage available at the first plurality of capacitors based on the randomized voltage reference signal.

9. The apparatus of claim 8, further comprising:
a plurality of flying capacitor, FC, circuits comprising a corresponding plurality of FCs, the plurality of FC circuits coupled to each other, and a first FC circuit of the plurality of FC circuits coupled to the first plurality of capacitors via a rail configured between an input terminal and an output terminal of the apparatus.

10. The apparatus of claim 9, wherein the first FC circuit further comprises:
a first FC, the first FC coupled to a second FC in a second FC circuit of the plurality of FC circuits;
a first switching circuit coupled to the first FC; and
a second switching circuit coupled to the first FC and the first switching circuit, the second switching circuit configured between the output terminal and a node of the PPRL coupled to the first plurality of capacitors.

11. The apparatus of claim 10, further comprising:
a third switching circuit coupled between the input terminal and the node of the PPRL, wherein the second switching circuit and the third switching circuit are associated with at least one randomized operational parameter, the at least one randomized operational parameter comprising switch resistance, and wherein the control circuit causes a reset of voltage at the node of the PPRL based on the at least one randomized operational parameter.

12. A method of configuring a voltage regulator, comprising:
coupling a PMOS transistor, an NMOS transistor, a control circuit, and a first plurality of capacitors to form a push-pull regulation loop, PPRL;
coupling the PPRL to a rail between an input terminal and an output terminal via the first plurality of capacitors;
coupling a second plurality of capacitors and a plurality of switching circuits to form a plurality of flying capacitor, FC, circuits;
coupling an FC circuit of the plurality of FC circuits to the input terminal via a switching circuit; and
coupling the control circuit to a reference voltage signal.

13. The method of claim 12, further comprising:
coupling a subset of the plurality of FC circuits in series with each other and to the FC circuit.

14. Machine-readable storage including machine-readable instructions, when executed, causes a computer/transmitter/receiver to implement a method as claimed in any preceding claim.

15. A computer program comprising instructions which, when the program is executed by a computer, cause the computer to carry out a method as claimed in any preceding claim.
